(19) **Europäisches Patentamt**

**European Patent Office**

**Office européen des brevets**

(11) **EP 0 725 922 B1**

(12) **EUROPÄISCHE PATENTSCHRIFT**

(45) Veröffentlichungstag und Bekanntmachung des Hinweises auf die Patenterteilung:
**15.07.1998 Patentblatt 1998/29**

(21) Anmeldenummer: **94928763.5**

(22) Anmeldetag: **11.10.1994**

(51) Int Cl.6: **G01F 1/66**

(86) Internationale Anmeldenummer:
**PCT/DE94/01190**

(87) Internationale Veröffentlichungsnummer:
**WO 95/12110 (04.05.1995 Gazette 1995/19)**

(54) **VORRICHTUNG ZUR DURCHFLUSSMESSUNG**

FLOW MEASUREMENT DEVICE

DEBITMETRE

(84) Benannte Vertragsstaaten:
**AT BE CH DE DK ES FR GB IE IT LI MC NL SE**

(30) Priorität: **25.10.1993 DE 4336370**

(43) Veröffentlichungstag der Anmeldung:
**14.08.1996 Patentblatt 1996/33**

(73) Patentinhaber: **SIEMENS AKTIENGESELLSCHAFT**
**80333 München (DE)**

(72) Erfinder: **VONTZ, Thomas, Dr.**
**D-81539 München (DE)**

(56) Entgegenhaltungen:
**EP-A- 0 223 123          EP-A- 0 268 314**
**US-A- 4 103 551**

## Beschreibung

Die Erfindung betrifft einen US-Durchflußmesser nach dem Oberbegriff des Patentanspruchs 1.

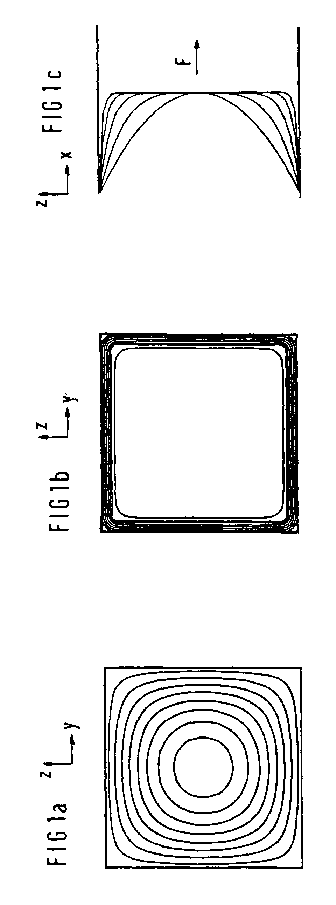

Bei der Durchflußmessung von bewegten flüssigen oder gasförmigen Medien (Fluiden) mit Ultraschall besteht das Problem, daß das vom Empfänger (Ultraschallwandler) gelieferte Meßsignal nicht nur vom Durchfluß, sondern auch vom jeweiligen Strömungsprofil im Meßrohr und der Art des durchströmenden Fluids abhängt. Je nach Strömungsgeschwindigkeit ergeben sich verschiedene Strömungsprofile. Das in Figur 1a gezeigte laminare Strömungsprofil in einem Rohr mit viereckigem Querschnitt tritt bei langsamer Strömungsgeschwindigkeit auf.Die im Inneren des Rohres eingezeichneten Linien veranschaulichen Bereiche gleicher Strömungsgeschwindigkeit. Laminare Strömungsprofile können durch eine parabolische Form, vgl. Figur1c, beschrieben werden. Die höchsten Strömungsgeschwindigkeiten treten in der Rohrmitte auf. Je größer der Durchfluß, also je hoher die Strömungsgeschwindigkeit ist, desto mehr nähert sich das Strömungsprofil einer Kastenform an. Figur 1b zeigt ein turbulentes Strömungsprofil, das bei hohen Strömungsgeschwindigkeiten auftritt. In weiten Bereichen des Rohres bleibt die Strömungsgeschwindigkeit in etwa gleich.

Die bisher bekannten Ultraschallwandler haben eine annähernd gaußförmige Empfindlichkeitsverteilung. Die maximale Empfindlichkeit des Ultraschallwandlers liegt in dessen Zentrum. Zum Rand hin nimmt sie stark ab. Zusätzlich wird die Empfindlichkeit durch die Rohrwandeigenschaften stark beeinflußt, wenn durch die Rohrwand eingestrahlt wird.

Beschallt man nun mit einem Ultraschallwandler in einem Strömungskanal das bewegte Medium, wie dies aus der DE 40 10 148 A1 bekannt ist, um aus der Schallaufzeit oder mittels des Dopplereffekts die Strömungsgeschwindigkeit zu bestimmen, so wird, insbesondere bei laminarem Strömungsprofiffi, die in der Strömungskanalmitte auftretende höchste Strömungsgeschwindigkeit stärker bewertet als die am Rand des Strömungskanals auftretende niedrigere Strömungsgeschwindigkeit. Dies hat zur Folge, daß sich für jedes Strömungsprofil und für jedes Fluid eine eigene Meßkennlinie ergibt, was zu einer aufwendigen Auswerteeinheit führt.

Weiterhin ist bei dem in der DE 40 10 148 A1 beschriebenen Durchflußmesser von Nachteil, daß das Ultraschallsignal sich aufgrund des Meßrohraufbaus nicht nur w-förmig, sondern auch auf einem parasitären v-förmigen Weg ausbreiten kann und deshalb zusätzliche Maßnahmen zur Unterdrückung der daraus resultierenden Signalanteile erforderlich sind.

Aus H. Bernard "Ultraschall-Durchflußmessung", messen + prüfen/automatik, Heft 5, 1983, Seite 258 bis 263 ist ein Durchflußmesser mit einem von einem flüssigen Medium durchströmten Meßrohr bekannt, bei dem Störungen des Strömungsprofils reduziert werden, indem von mehreren Ultraschallwandlern erzeugte Meßstrahlen über den Rohrquerschnitt verteilt werden. Der Aufwand zur Signalauswertung steigt mit der Anzahl der verwendeten Ultraschallwandler.

L. C. Linworth beschreibt in "Ultrasonic Measurements for Process Control" Academic Press, San Diego, 1989, auf den Seiten 288 ff Durchflußmesser, deren Meßrohr mit einem Ultraschallsendewandler und einem Ultraschallempfangswandler versehen ist. Die Abstrahl- und Empfangsflächen der Ultraschallwandler sind derart abgeschrägt, daß der abgestrahlte Schall je nach Ausführungsform an einer, zwei oder vier Reflexionsstellen im Meßrohr reflektiert wird.

Aus dem Dokument US 4 103 551 ist ein Ultraschallmeßsystem für verschiedene Durchflußeigenschaften angegeben. Die Vorrichtung dient zur Ultraschalldurchflußmessung in einem runden Rohr, das zwei Ultraschallwandler aufweist, die entlang eines akustischen Wegs in dem Rohr miteinander kommunizieren. Der akustische Weg beinhaltet eine Sehne, die den Rohrradius halbiert.

Aus dem Stand der Technik EP 0 268 314 A1 ist eine Vorrichtung zur Bestimmung des Durchflußes in einem zylindrischen Rohr bekannt. Die Durchflußmeßvorrichtung weist ein erstes und ein zweites Paar Ultraschallwandler auf, wobei jeweils einer der Ultraschallwandler ein Ultraschallsignal schräg in das Rohr abstrahlt, in welchem das Signal an zwei Stellen des Meßrohrs reflektiert wird und schräg zum entsprechenden Empfangswandler gelangt. Durch diese Vorrichtung können Störungen durch im Fluß auftretende Wirbel kompensiert werden.

Der Erfindung liegt die Aufgabe zugrunde, eine Vorrichtung zu schaffen, die eine höhere Meßgenauigkeit hat und deren Meßsignal nurmehr vom Durchfluß und nicht mehr von der Art des verwendeten Fluids und dem vorliegenden Strömungsprofil abhängt.

Die Aufgabe wird erfindungsgemäß durch eine Vorrichtung gemäß dem Patentanspruch 1 gelöst.

Vorteilhafte Weiterbildungen der Erfindung ergeben sich aus den abhängigen Ansprüchen.

Anhand der Figuren soll die Erfindung näher erläutert werden.

Figur 1 zeigt ein laminares und ein turbulentes Strömungsprofil im Strömungskanalquerschnitt und mögliche Strömungsprofile im Strömungskanal in der Seitenansicht.

Figur 2 zeigt einen konventionellen US-Durchflußmesser mit seitenwandparalleler Durchschallung des Strömungskanals.

Figur 3 zeigt die Fehlerkurve des US-Durchflußmessers nach Figur 2.

Figur 4 zeigt einen erfindungsgemäßen US-Durchflußmesser mit spiralförmiger Durchschallung des Strömungskanals.

Figur 5 zeigt die Bemaßung des Strömungskanals für die Bestimmung der Reflexionswinkel.

Figur 6 zeigt ein weiteres Ausführungsbeispiel eines erfindungsgemäßen US-Durchflußmessers.

Figur 7 zeigt die Fehlerkurve für den US-Durchflußmesser nach Figur 4.

Figur 8 zeigt einen Reflektor des US-Durchflußmessers nach Figur 4.

Figur 9 zeigt die Fehlerkurve für den US-Durchflußmesser nach Figur 6.

Figur 10 zeigt einen Reflektor des US-Durchflußmessers nach Figur 6.

Fig. 11 und 12 zeigen weitere Ausführungsbeispiele erfindungsgemäßer US-Durchflußmesser mit mehreren US-Sende- und Empfangswandlern bzw. mit axial versetzten US-Sende-Empfangswandlern.

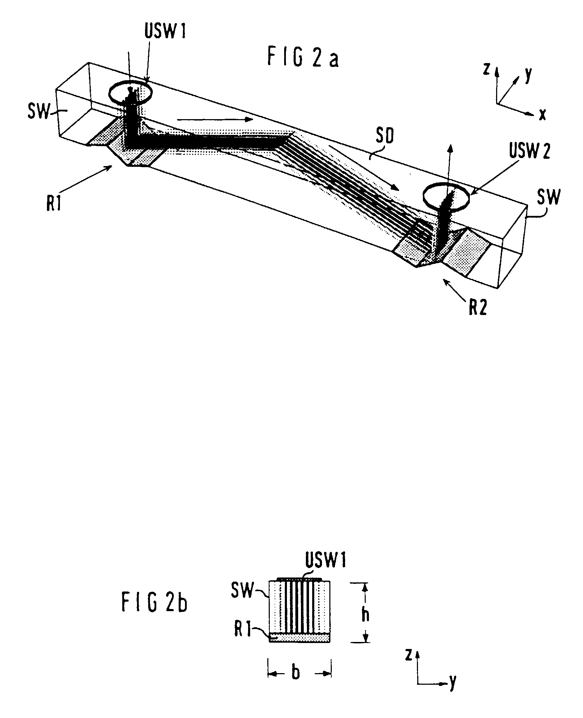

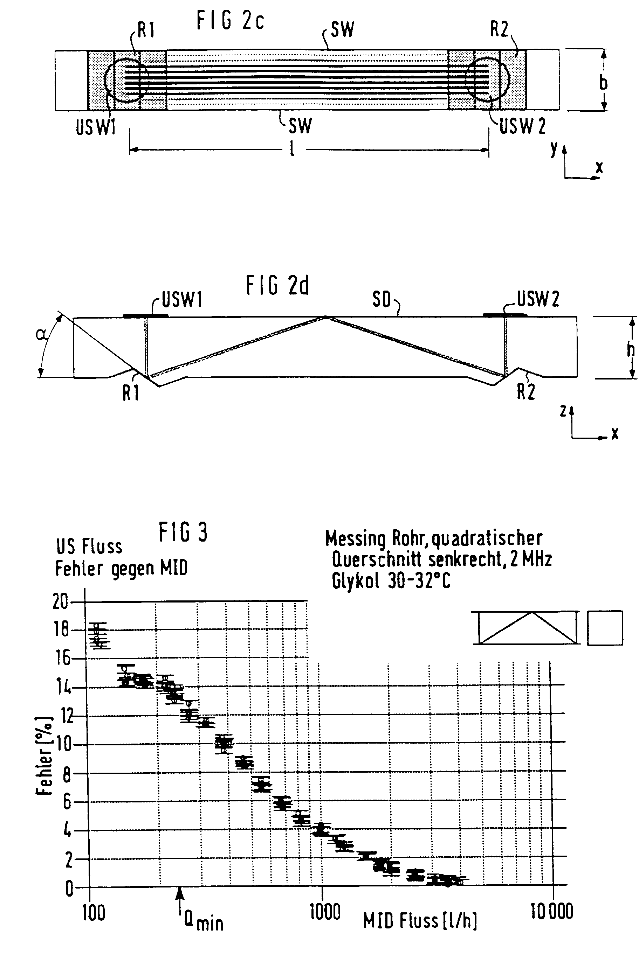

In Meßanordnungen für Strömungskanäle mit Durchmessern $d \leq 50$ mm wird der Schall üblicherweise parallel zu den Strömungskanal Seitenwänden SW von einem als Sender dienenden US-Wandler USW1 zu einem US-Empfangswandler USW2 geführt (s. Fig. 2). Bei dem dargestellten Durchflußmesser läuft der Schall auf einem V-förmigen Weg durch den Strömungskanal, wobei der dem Sender USW1 gegenüberliegende Reflektor R1 den Ultraschall in Richtung Strömungskanalecke SD und der zweite Reflektor R2 den Ultraschall in Richtung des Empfangswandlers USW2 umlenkt. Die Richtcharakteristik der verwendeten US-Wandler bewirkt eine erhöhte Sensitivität auf den Verbindungslinien zwischen den Wandlerzentren. Hierbei kann man eine gaußförmige Verteilung der Sensitivität vom Wandlerzentrum zum Rand hin annehmen. Diese ist in Fig. 2 für einen linienförmigen Ausschnitt aus dem Wandler USW1 durch eine grau-Codierung veranschaulicht (schwarz: = höchste, hellgrau: = geringste Sensitivität). Wenn sich der Ultraschall nur parallel zu den Seitenwänden SW ausbreitet, laufen die Strahlen (die Ausbreitungsrichtung einer Wellenfront wird im folgenden vereinfachend mit der Ausbreitungsrichtung von Strahlen veranschaulicht) mit der höchsten Sensitivität durch den mittleren Bereich des Strömungskanals und registrieren folglich auch die höheren Geschwindigkeiten mit einer höheren Wertigkeit. Demgegenüber werden die Randbereiche des Strömungskanals von den weniger sensitiven Strahlen durchlaufen, so daß man die dort auftretenden niedrigen Geschwindigkeiten mit einer entsprechend geringeren Wertigkeit registriert. Daraus resultieren Fehlerkurven mit einem sehr großen Fehler bei kleinen Geschwindigkeiten (= kleiner Durchfluß), der für höhere Geschwindigkeiten (= großer Durchfluß) langsam abnimmt. In der in Fig. 3 gezeigten Fehlerkurve sind die relativen Meßfehler der US-Messung im Vergleich zu einer Referenzmethode, z. B. der Messung mit einem magnetisch-induktiven Durchflußmesser (MID) dargestellt.

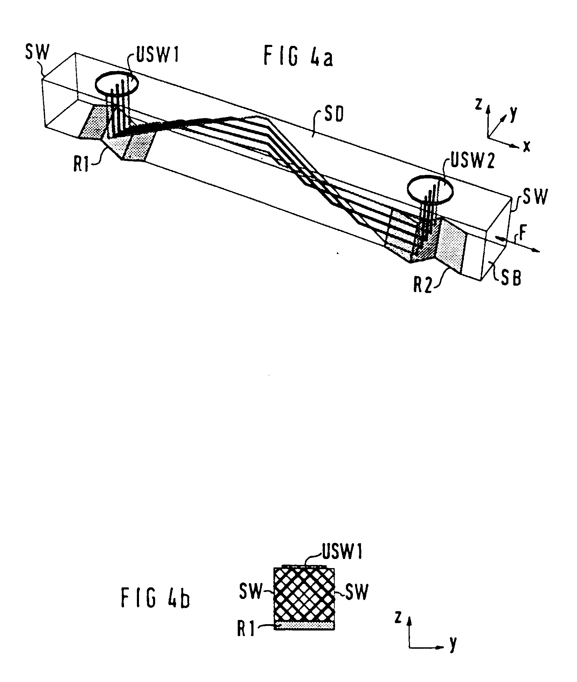

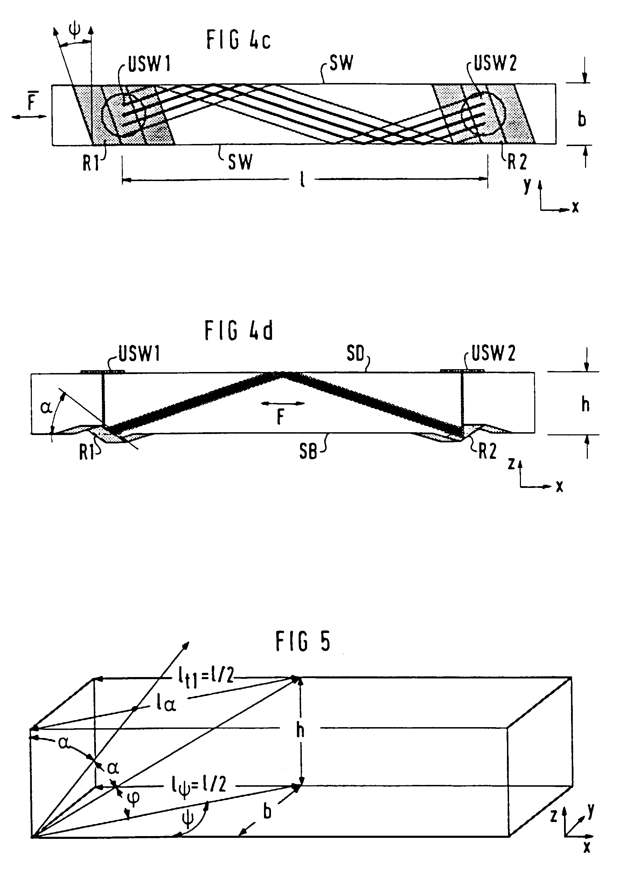

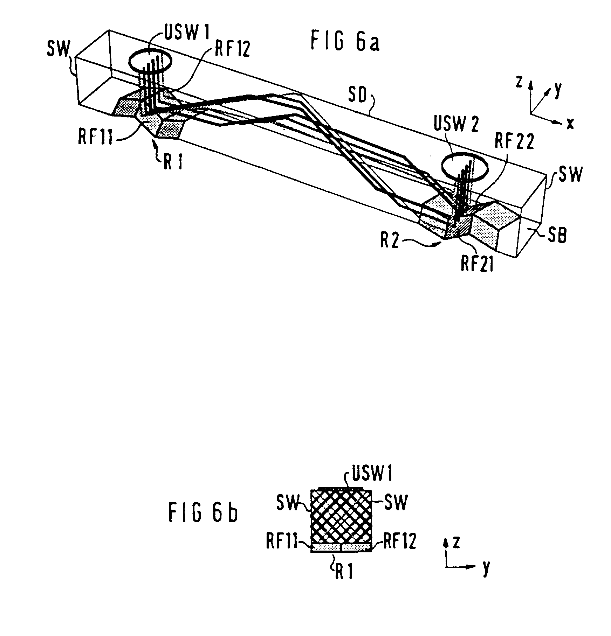

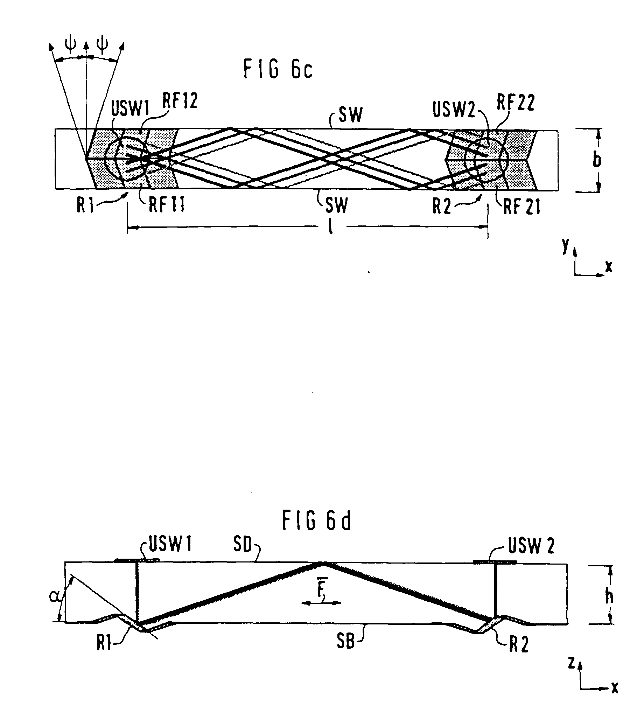

Um eine weitgehend homogene Durchschallung, d. h. eine gleichmäßige Sensitivität über den Kanalquerschnitt zu gewährleisten, werden Schallwellen hoher Sensitivität, also die vom Zentrum des Wandlers USW1 ausgehenden Ultraschallwellen, mit Hilfe geeignet orientierter Reflektoren R1/R2 durch alle Bereiche des Strömungskanals geführt (s. Fig. 4 und 6). Dies geschieht durch die kombinierte und abwechselnde Nutzung der Reflexion der Schallwellen an den Seitenwänden SW, der Decke SD und dem Boden SB des Strömungskanals. Anstatt den Ultraschall ausschließlich parallel zu den Seitenwänden SW von einem ersten zu einem zweiten Ultraschallwandler zu senden, also lediglich die Decken- und Bodenreflexion zu nutzen, durchläuft der Ultraschall den Strömungskanal in dem erfindungsgemäßen Durchflußmesser spiralförmig. Die damit erreichte Homogenisierung der Durchschallung des Strömungskanals mit Strahlen unterschiedlichster Sensitivität wird besonders durch Vergleich der Figuren 4b und 6b mit Fig. 2b deutlich.

Die im folgenden beschriebenen Ausführungsbeispiele beziehen sich auf einen Strömungskanal der Länge l (l: = Abstand der Wandlerzentren) mit quadratischem Querschnitt (Breite b, Höhe h).

Zur Festlegung der Geometrie des Strömungskanals und der Orientierung der Reflektoren R1 und R2, müssen die Reflexionswinkel berechnet werden. Zu dem konventionellen Winkel $\alpha$ für die Dekken- und Boden-Reflexion, welcher in dem gezeigten Ausführungsbeispiel den klassischen V-Weg der Schallausbreitung ergibt, kommt ein neuer Winkel $\Psi$ für die Reflexion an den Seitenwänden hinzu (s. Fig. 4c).

Erfindungsgemäß werden die beiden Winkel $\alpha$ und $\Psi$ unter Berücksichtigung der folgenden Randbedingungen berechnet und kombiniert:

1) Die Weglängen der einzelnen Strahlen sollen gleich lang sein, damit sich Teilstrahlen nicht ungewollt durch Interferenz auslöschen. Die Form der Wellenfront bleibt dadurch gewahrt.

2) Für den Winkel $\alpha$ (Boden-Decke-Reflexion) gibt es bei der in den Ausführungsbeispielen gewählten Anordnung von Wandlern und Reflektoren nur zwei mögliche Schallwege: den V-förmigen und den W-förmigen Schallweg (die Vor- bzw. Nachlaufwege senkrecht zur Strömungsrichtung F tragen nicht zum Meßsignal bei und bleiben daher unberücksichtigt).

Der V-förmige Schallweg ist dadurch gekennzeichnet, daß der Schall vom Wandler USW1 über den Reflektor R1 zur Strömungskanaldecke SD gelangt, von dort in Richtung R2 reflektiert und von R2 zum Ultraschallwandler USW2 umgelenkt wird (eine Deckenreflexion, vgl. Fig. 4d).

Bei dem nicht dargestellten W-förmigen Schallweg gelangt der von einem Sendewandler ausgestrahlte Ultraschall über die Stationen -erster Reflektor-Strömungskanaldecke-Strömungskanalboden-Strömungskanaldecke-zweiter Reflektor- zum Empfangswandler (drei Reflexionen an den Wandungen des Strömungskanals).

Ohne Querschall ($\Psi = 0$) berechnen sich die Elevationswinkel $\alpha_V$ für den V-förmigen Schallweg und $\alpha_W$ für den W-förmigen Schallweg zu:

$$\alpha_v = 0{,}5 \cdot l \cdot \arctan (0{,}5 \cdot l/h)$$

$$\alpha_w = 0{,}5 \cdot l \cdot \arctan (0{,}25 \cdot l/h)$$

$\alpha_v$ = Elevationswinkel bei v-förmigem Schallweg

$\alpha_w$ = Elevationswinkel bei w-förmigem Schallweg

Mit Querschall (Azimutwinkel $\psi \neq 0$) ergeben sich die beiden Elevationswinkel $\alpha_v$ und $\alpha_w$ zu:

$$\alpha_v = 0{,}5 \cdot l \cdot \arctan (|0{,}5 \cdot l / \cos(\psi)|) = 0{,}5 \cdot l \arctan(l_{\alpha v}/h)$$

$$\alpha_w = 0{,}5 \, l \cdot \arctan (|0{,}25 \cdot l / \cos(\psi)|) = 0{,}5 \cdot l \arctan(l_{\alpha w}/h)$$

Für den Azimutwinkel $\psi$ (Querschall: Reflexion an den Seitenwänden SW) sind durch Reflektorsegmentierung und Orientierung eine Fülle von Werten möglich. Jedoch sind nur wenige geeignet die homogene Verteilung der Sensitivität zu gewährleisten. Aus dem Abstand $l_\psi$ des ersten Reflektors R1 zum Reflexionspunkt an der Seitenwand SW und der Strömungskanalbreite b läßt sich der Azimutwinkel $\psi$ zu:

$$\psi = \pm \arctan (b/l_\psi)$$

bestimmen (s. Fig. 5). Aus dieser Gleichung ergeben sich folgende Ausführungsbeispiele:

1. Ausführungsbeispiel:

Beide Reflektoren R1 und R2 und damit auch die Reflexionsflächen RF1 und RF2 werden um den Azimutwinkel $\psi$ gedreht (s. Fig. 4c). Die Drehrichtung ist unerheblich, weil symmetrische Konfigurationen entstehen. Der Abstand $l_\psi$ kann aus folgender Menge gewählt werden:

$$l_\psi = \{\tfrac{1}{2} \cdot l; \; \tfrac{1}{4} \cdot l; \; \tfrac{1}{6} \cdot l\}$$

Höhere Ordnungen werden hier vernachlässigt, da ansonsten die Signalqualität wegen der großen Anzahl von Reflexionen leiden würde.

2. Ausführungsbeispiel:

Ein Reflektor wird um den Azimutwinkel $\psi$, der andere um den Azimutwinkel $-\psi$ gedreht. Der Abstand $l_\psi$ kann dann zu:

$$l_\psi = \{\tfrac{1}{3} \cdot l\}$$

gewählt werden

3. Ausführungsbeispiel:

Die Reflektoren werden in jeweils zwei Reflexionsflächen unterteilt. Jede dieser Reflexionsflächen erhält eine eigene Ausrichtung $+\psi$ bzw. $-\psi$, (siehe Figur 6c). Die Reflexionsfläche RF11 des ersten R1 ist um den Winkel $-\psi$, die Reflexionsfläche RF12 des Reflektors R1 ist um den Winkel $+\psi$ gedreht. Die Reflexionsflächen RF21 und RF22 des zweiten Reflektors R2 sind auf dieselbe Art und Weise gedreht. Die Bestimmung des Azimutwinkels $\psi$ ergibt sich, wie bei den Ausführungsbeispielen 1 und 2, aus obiger Gleichung. Durch eine derartige Kombination der Reflektoren wird die einfallende Wellenfront in zwei in unterschiedlicher Richtung weiterlaufende Wellenfronten aufgespalten, die sich nach Durchlaufen eines gleichlangen Weges im zweiten Reflektor R2 rekombinieren. Der Abstand $l\psi$ kann aus der Menge

$$l\psi = \{l; \; \tfrac{1}{2} \cdot l; \; {}^{1}\!/3 \cdot l; \; \tfrac{1}{4} \cdot l; \; 1/5 \; l \; usw\}$$

gewählt werden.

4. Ausführungsbeispiel:

Der Azimutwinkel $\psi$ wird so gewählt, daß der erste Reflektor R1 und der zweite Reflektor R2 eine konvexe Kombination ergeben, d.h. die erste Reflexionsfläche RF11 des ersten Reflektors R1 ist um den Azimutwinkel -$\psi$, die zweite Reflexionsfläche RF21 des ersten Reflektors R1 ist um den Azimutwinkel +$\psi$, die erste Reflexionsfläche RF12 des zweiten Reflektors R2 ist um den Azimutwinkel +$\psi$ und die zweite Reflexionsfläche RF22 des zweiten Reflektors R2 ist um den Azimutwinkel -$\psi$ gedreht. Die Rekombination der Wellenfront im zweiten Reflektor R2 geschieht hier mit Umverteilung der Sensitivität vom Zentrum zum Rand hin und umgekehrt. Hierdurch wird die Verteilung zwar verbessert, es sind jedoch Signalpegelverluste zu erwarten. Der Abstand $l\psi$ sollte zu

$$l\psi = {}^{2}\!/_{3} \cdot l$$

gewählt werden.

5. Ausführungsbeispiel:

Es wird der Azimutwinkel $\Psi$ so gewählt, daß der erste Reflektor R1 und der zweite Reflektor R2 eine konkave Kombination ergeben, d.h. die erste Reflexionsfläche RF11 des ersten Reflektors R1 wird um den Azimutwinkel +$\psi$, die zweite Reflexionsfläche RF21 des ersten Reflektors R1 wird um den Azimutwinkel -$\psi$, die erste Reflexionsfläche RF12 des zweiten Reflektors R2 wird um den Azimutwinkel +$\psi$ und die zweite Reflexionsfläche RF22 des zweiten Reflektors R2 um den Azimutwinkel -$\psi$ gedreht. Die Rekombination der Wellenfront erfolgt hier wie im 4. Ausführungsbeispiel. Der Abstand $l\psi$ ist vorteilhafterweise zu

$$l\psi = {}^{2}\!/3 \cdot l$$

zu wählen.

Bei allen genannten Ausführungsbeispielen sollte der Abstand $l\psi$ den angegebenen Wertebereich nicht unterschreiten, da ansonsten die Signalqualität aufgrund der hohen Anzahl an Reflexionen leiden würde.

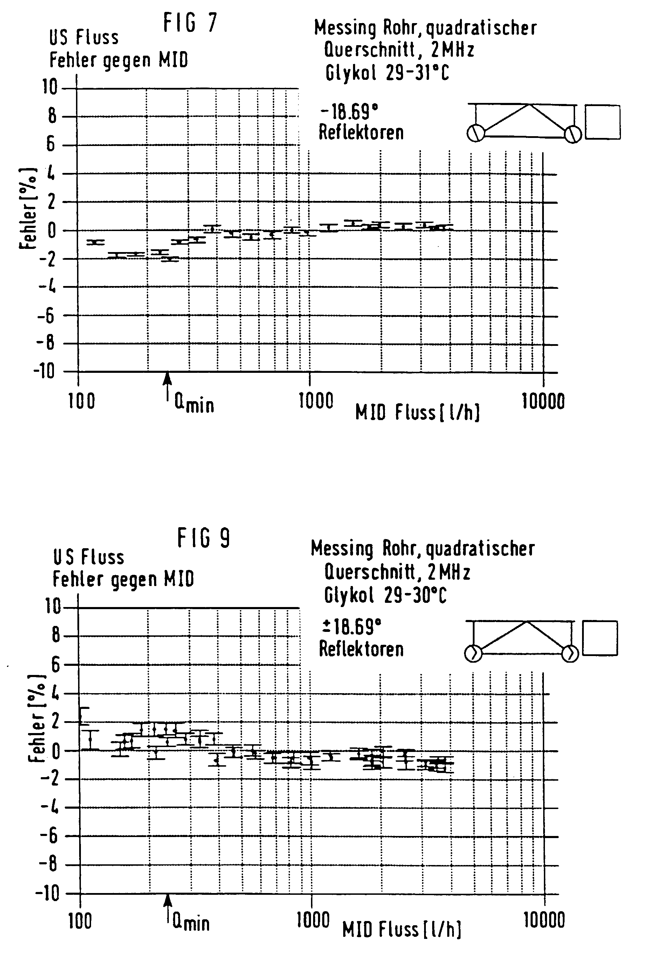

Das in Figur 4 gezeigte Ausführungsbeispiel 1 mit V-förmigem Schallweg zeigte bei Versuchen die besten Resultate bezüglich der Linearität und der Stoffunabhängigkeit der Kennlinie (vgl. hierzu Figur 7). Der Fehler bei dem Testmedium Glykol lag im getesteten Meßbereich von 100 - 4000 l/h bei weniger als $\pm$ 1,5 %. Bei dem in Figur 2 dargestellten Ultraschalldurchflußmesser mit seitenwandparalleler Durchschallung lag der Meßfehler bei kleinen Flüssen bei > 18%. Für Wasser liegen die Fehler in einem Band von $\leq$ 0,8 % (vorher 9 %), jeweils im Vergleich mit einem MID-Durchflußmesser, für den ein maximaler Fehler von 0,5 % angenommen werden kann.

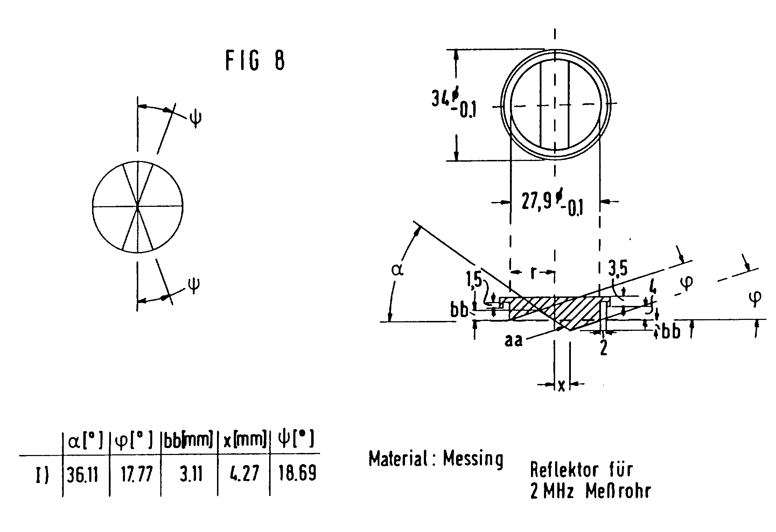

Den in Fig. 8 dargestellten Reflektor kann man insbesondere in einem Durchflußmesser gemäß Fig. 4 verwenden. Der Reflektor ist vorzugsweise aus Messing gefertigt und besitzt die in der folgenden Tabelle angegebene Bemaßung. Diese Tabelle enthält auch die Abmessungen des Strömungskanals.

Tabelle 1:

| | |
|---|---|
| Länge | l = 130 mm |
| Hohe | h = 22 mm |
| Breite | b = 22 mm |
| Reflektor Radius | r = 14 mm |

Tabelle 1:   (fortgesetzt)

| Reflektor Maß | bb = 3.11 mm |
|---|---|
| Reflektor Maß | x = 4.27 mm |
|  |  |
| Linker Drehwinkel | $\Psi L$= -ArcTan[b/(0,5$\cdot$ l)]=-18.69° |
| Rechter Drehwinkel | $\Psi R = \Psi L$ = -18.699° |
| V-Weg Vorgabe | $l_{t1} = 0,5 \cdot l$ |
| Gedrehter V-Weg | $1_\alpha$ = Abs[$l_{t1}$/(Cos[$\Psi L$])] |
| Boden-Decke Anstellwinkel | $\alpha$= 0,5$\cdot$ l $\cdot$ ArcTan[$l_\alpha$/h] =36.11° |
| Seitenwände-Anstellwinkel | $\varphi$ = 90 -2$\alpha$ = 17.77° |
| aa=r/(Cos[$\alpha$]+Sin($\alpha$)/Tan[Pi/2-2 $\alpha$])<br>x=aa Cos[$\alpha$]<br>bb=aa Sin[$\alpha$]<br>X bezeichnet die horizontale Projektion der Schrägfläche aa und bb die Höhe der Ränder. | |

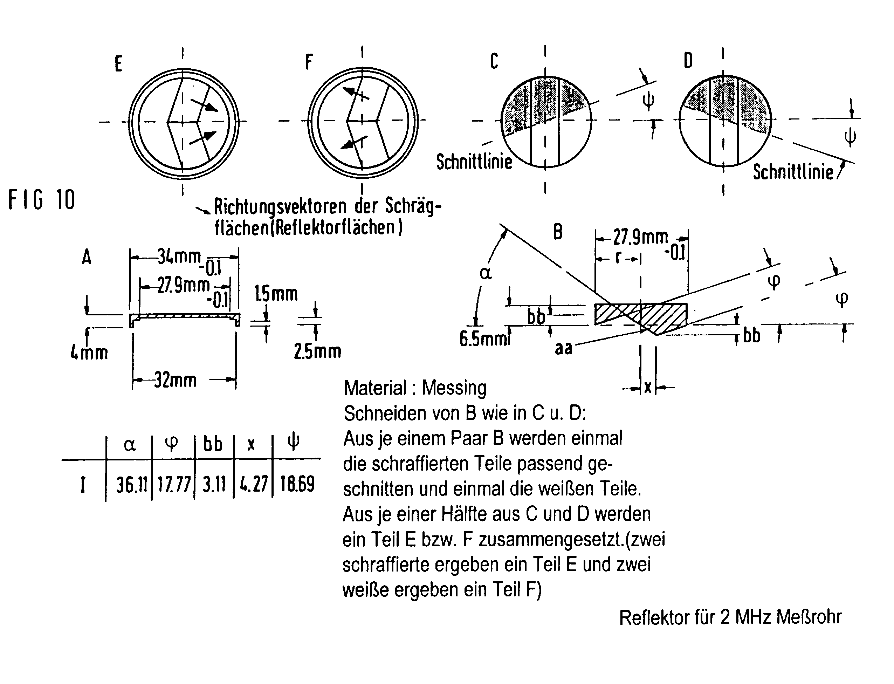

Bei dem in Figur 6 gezeigten Ausführungsbeispiel 3 ergaben sich ähnlich gute Resultate bezüglich der Linearität und der Stoffunabhängigkeit der Kennlinie (s. Fig. 9). Der Nutzsignalpegel liegt allerdings etwas niedriger als bei dem Ausführungsbeispiel 3. Der Fehler beim Testen mit Glykol (Wasser) lag im Meßbereich von 100 - 4000 l/h bei weniger als ± 2% (1%).

Die im Durchflußmesser gemäß Fig. 6 verwendeten Reflektoren lassen sich aus den in Fig. 10 dargestellten Bauteilen wie folgt herstellen:

Aus je einem Paar des Teils B werden einmal die grau markierten Teile und einmal die weißen Teile wie in C und D angegeben passend geschnitten. Aus je einer Hälfte aus C und D werden ein Teil E bzw. F zusammengesetzt (zwei graue Teile ergeben einen Teil E und zwei weiße Teile ergeben ein Teil F). Die Bemaßung und die Winkel sind in Fig. 10 und Tabelle 2 angegeben.

Tabelle 2:

| Länge | l = 130 mm |
|---|---|
| Höhe | h = 22 mm |
| Breite | b = 22 mm |
| Reflektor Radius | r = 14 mm |
| Reflektor Maß | bb = 3.11 mm |
| Reflektor Maß | x = 4.27 mm |
|  |  |
| 1.linker Drehwinkel | $\Psi L$ = -ArcTan[b/(0,5$\cdot$l)]=-18.69° |
| 1.rechter Drehwinkel | $\Psi R$ = -$\Psi L$ =18.699° |
| 2.linker Drehwinkel | $\Psi L$ = -$\Psi L$ = 18.69° |
| 2.rechter Drehwinkel | $\Psi R = \Psi L$ = -18.699° |
| V-Weg Vorgabe | $l_{t1}$ = 0,5$\cdot$1 |
| Gedrehter V-Weg | $1_\alpha$ = Abs[$l_{t1}$/(Cos[$\Psi L$])] |
| Boden-Decke Anstellwinkel | $\alpha$ = 0,5$\cdot$l ArcTan[$1_\alpha$/h]=36.11° |
| Seitenwände-Anstellwinkel | $\varphi$ = 90 - 2$\alpha$ = 17,77° |

Im nachfolgenden sind weitere Variationsmöglichkeiten zum Aufbau der erfindungsgemäßen Meßvorrichtung angegeben:

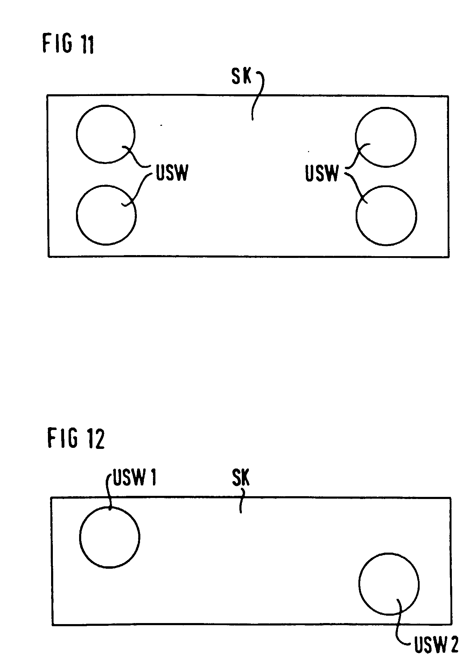

- Alle Kombinationen der axialen und queraxialen Reflexionen
- Längenvariation
- Variation des Verhältnisses der Rohrabmessungen
- Kombination zweier oder mehrerer Meßrohre mit verschiedener Meßcharakteristik
- Verwendung von mehreren Sendern bei größeren Nennweiten
- sechseckiger Querschnitt
- ovaler oder runder Querschnitt
- Durchmesseränderung in axialer Richtung, konische Rohre
- Reflektoren auf verschiedenen Wänden
- gedrehte, ebene Reflektoren
- gedrehte und in mehrere Reflexionsflächen aufgeteilte Reflektoren
- gedrehte und/oder ungedrehte gekrümmte Reflektoren
- Sende- u. Empfangswandler auf einer Seite des Strömungskanals
- Sende- und Empfangswandler gegenüberliegend
- Sende- und Empfangswandler axial versetzt (s. Fig. 12)
- mehrere Sende- und Empfangswandler verteilt auf verschiedenen Seitenwänden (s. Fig. 11).

Die erfindungsgemäße Meßvorrichtung ist nicht nur für die Durchflußmessung verschiedenster Flüssigkeiten geeignet, sondern auch für die Durchflußmessung verschiedenster Gase und auch für die, als Wärmezähler bezeichneten, Wasser- Durchflußmesser in Heiz-Kühlsystemen.

## Patentansprüche

1. Durchflußmesser mit einem von einem gasförmigen oder flüssigen Medium durchströmenden Meßrohr, einem das Medium beschallenden Ultraschallwandler (USW1), einem im Meßrohr angeordneten ersten Reflektor (R1) und einem Ultraschall-Empfangswandler (USW2), wobei die einzelnen Komponenten derart zueinander orientiert sind, daß der Ultraschall zumindest eine Reflexion an einer ebenen Wandung des Meßrohrs erfährt, und wobei eine Flächennormale des ersten Reflektors (R1) drei von Null verschiedene Komponenten in einem rechtwinkligen Koordinatensystem aufweist, dessen eine Achse parallel zur Strömungsrichtung (F) orientiert ist.

2. Durchflußmesser nach Anspruch 1,
   **gekennzeichnet durch**
   einen segmentiert aufgebauten ersten Reflektor (R1), wobei die Flächennormalen der Reflektorsegmente (RF11, RF12) nicht parallel zueinander orientiert sind.

3. Durchflußmesser nach Anspruch 1 oder 2,
   **dadurch gekennzeichnet,**
   daß der erste Reflektor (R1) dem Ultraschallwandler (USW1) im Meßrohr gegenüberliegend angeordnet ist.

4. Durchflußmesser nach einem der Ansprüche 1 bis 3,
   **dadurch gekennzeichnet,**
   daß der US-Wandler (USW1) den Ultraschall senkrecht zur Strömungsrichtung in das Meßrohr einstrahlt.

5. Durchflußmesser nach einem der Ansprüche 1 bis 4,
   **gekennzeichnet durch**
   einen im Meßrohr angeordneten zweiten Reflektor (R2).

6. Durchflußmesser nach Anspruch 5,
   **dadurch gekennzeichnet,**
   daß eine Flächennormale des zweiten Reflektors (R2) drei Komponenten in dem rechtwinkligen Koordinatensystem aufweist.

7. Durchflußmesser nach Anspruch 5 oder 6,
   **gekennzeichnet durch**
   einen segmentiert aufgebauten zweiten Reflektor (R2) wobei die Flächennormalen der Reflektorsegmente (RF21, RF22) nicht parallel zueinander orientiert sind.

**8.** Durchflußmesser nach einem der Ansprüche 5 bis 7,
**dadurch gekennzeichnet,**
daß der zweite Reflektor (R2) dem US-Empfangswandler (USW2) im Meßrohr gegenüberliegend angeordnet ist.

**9.** Durchflußmesser nach einem der Ansprüche 1 bis 8,
**gekennzeichnet durch**
einen ebenen ersten und/oder zweiten Reflektor (R1, R2).

**10.** Durchflußmesser nach einem der Ansprüche 1 bis 9,
**dadurch gekennzeichnet,**
daß die Reflektorsegmente (RF11, RF12, RF21, RF22) des ersten und/oder zweiten Reflektors (R1, R2) ebene Flächen sind.

**11.** Durchflußmesser nach einem der Ansprüche 1 bis 10,
**dadurch gekennzeichnet,**
daß eine Symmetrieachse des US-Wandlers (USW1) parallel zu einer Symmetrieachse des US-Empfangswandlers (USW2) orientiert ist.

**12.** Durchflußmesser nach einem der Ansprüche 1 bis 10,
**dadurch gekennzeichnet,**
daß eine Symmetrieachse des US-Wandlers (USW1) gegenüber einer Symmetrieachse des US-Empfangswandlers (USW2) geneigt ist.

**Claims**

**1.** Flowmeter having a measurement tube through which a gaseous or liquid medium flows, having an ultrasound transducer (USW1) which ensonifies the medium, having a first reflector (R1) which is arranged in the measurement tube and having an ultrasound receiving transducer (USW2), the individual components being oriented with respect to one another in such a manner that the ultrasound is reflected at least once on a planar wall of the measurement tube, a normal to the surface of the first reflector (R1) having three components, which are not zero, in a rectangular coordinate system, one of whose axes is oriented parallel to the flow direction (F).

**2.** Flowmeter according to Claim 1,
characterized by
a first reflector (R1) which is of segmented construction, the normals to the surfaces of the reflector segments (RF11, RF12) not being oriented parallel to one another.

**3.** Flowmeter according to Claim 1 or 2,
characterized
in that the first reflector (R1) is arranged opposite the ultrasound transducer (USW1) in the measurement tube.

**4.** Flowmeter according to one of Claims 1 to 3,
characterized
in that the ultrasound transducer (USW1) injects the ultrasound into the measurement tube at right angles to the flow direction.

**5.** Flowmeter according to one of Claims 1 to 4,
characterized by
a second reflector (R2) which is arranged in the measurement tube.

**6.** Flowmeter according to Claim 5,
characterized
in that a normal to the surface of the second reflector (R2) has three components in the rectangular coordinate system.

**7.** Flowmeter according to Claim 5 or 6,
characterized by

a second reflector (R2) which is of segmented construction, the normals to the surfaces of the reflector segments (RF21, RF22) not being oriented parallel to one another.

**8.** Flowmeter according to one of Claims 5 to 7,
characterized
in that the second reflector (R2) is arranged opposite the ultrasound receiving transducer (USW2) in the measurement tube.

**9.** Flowmeter according to one of Claims 1 to 8,
characterized by
a planar first and/or second reflector (R1, R2).

**10.** Flowmeter according to one of Claims 1 to 9,
characterized
in that the reflector segments (RF11, RF12, RF21, RF22) of the first and/or second reflector (R1, R2) are planar surfaces.

**11.** Flowmeter according to one of Claims 1 to 10,
characterized
in that one axis of symmetry of the ultrasound transducer (USW1) is oriented parallel to one axis of symmetry of the ultrasound receiving transducer (USW2).

**12.** Flowmeter according to one of Claims 1 to 10,
characterized
in that one axis of symmetry of the ultrasound transducer (USW1) is inclined with respect to one axis of symmetry of the ultrasound receiving transducer (USW2).

**Revendications**

**1.** Débitmètre, comprenant un tube de mesure, dans lequel passe un milieu liquide ou gazeux (fluide), un transducteur ultrasonore (USW1) ) exposant le fluide aux ultrasons, un premier réflecteur (R1) disposé dans le tube de mesure et un transducteur ultrasonore de réception (USW2), les éléments étant orientés les uns par rapport aux autres de telle sorte que les ultrasons subissent au moins une réflexion sur une paroi plane du tube de mesure, et une normale à la surface du premier réflecteur (R1) présentant trois composantes différentes de zéro dans un système de coordonnées rectangulaires dont un axe est orienté parallèlement à la direction d'écoulement (F).

**2.** Débitmètre selon la revendication 1, **caractérisé** par un premier réflecteur (R1) constitué de segments, les normales à la surface des segments de réflecteur (RF11, RF12) n'étant pas orientées parallèlement entre elles.

**3.** Débitmètre selon la revendication 1 ou 2, **caractérisé** en ce que le premier réflecteur (R1) est disposé en vis-à-vis du transducteur ultrasonore (USW1) ) dans le tube de mesure.

**4.** Débitmètre selon l'une des revendications 1 à 3, **caractérisé** en ce que le transducteur ultrasonore (USW1) émet les ultrasons perpendiculairement à la direction d'écoulement dans le tube de mesure.

**5.** Débitmètre selon l'une des revendications 1 à 4, **caractérisé** par un deuxième réflecteur (R2) disposé dans le tube de mesure.

**6.** Débitmètre selon la revendication 5, **caractérisé** en ce qu'une normale à la surface du deuxième réflecteur (R2) présente trois composantes dans le système de coordonnées rectangulaires.

**7.** Débitmètre selon la revendication 5 ou 6, **caractérisé** par un deuxième réflecteur (R2) constitué de segments, les normales à la surface des segments de réflecteur (RF21, RF22) n'étant pas orientées parallèlement entre elles.

**8.** Débitmètre selon l'une des revendications 5 à 7, **caractérisé** en ce que le deuxième réflecteur (R2) est disposé en vis-à-vis du transducteur ultrasonore de réception (USW2) dans le tube de mesure.

9. Débitmètre selon l'une des revendications 1 à 8, **caractérisé** par un premier réflecteur (R1) plan et/ou un deuxième réflecteur (R2) plan.

10. Débitmètre selon l'une des revendications 1 à 9, **caractérisé** en ce que les segments de réflecteur (RF11, RF12, RF21, RF22) du premier réflecteur (R1) et/ou du deuxième réflecteur (R2) sont des surfaces planes.

11. Débitmètre selon l'une des revendications 1 à 10, **caractérisé** en ce qu'un axe de symétrie du transducteur ultrasonore (USW1) est orienté parallèlement à un axe de symétrie du transducteur ultrasonore de réception (USW2).

12. Débitmètre selon l'une des revendications 1 à 10, **caractérisé** en ce qu'un axe de symétrie du transducteur ultrasonore (USW1) est incliné par rapport à un axe de symétrie du transducteur ultrasonore de réception (USW2).

EP 0 725 922 B1

FIG 1a

$z$, $y$

FIG 1b

$z$, $y$

$z$, $x$ FIG 1c

$F$

FIG 2a

FIG 2b

FIG 2c

R1    SW    R2

USW1    SW    USW 2

b

l

y
x

FIG 2d

USW1    SD    USW2

α    h

R1    R2

z
x

FIG 3

US Fluss
Fehler gegen MID

Messing Rohr,quadratischer
Querschnitt senkrecht, 2 MHz
Glykol 30-32°C

Fehler [%]

20
18
16
14
12
10
8
6
4
2
0

100    Q$_{min}$    1000    MID Fluss [l/h]    10 000

FIG 4a

SW  USW1  SD

z  y
x

R1  USW2  SW  F

R2  SB

FIG 4b

USW1
SW  SW
R1

z
y

EP 0 725 922 B1

FIG 4c

FIG 4d

FIG 5

15

FIG 6a

FIG 6b

FIG 6c

FIG 6d

FIG 7

US Fluss
Fehler gegen MID

Messing Rohr, quadratischer
Querschnitt, 2MHz
Glykol 29–31°C

−18.69°
Reflektoren

FIG 9

US Fluss
Fehler gegen MID

Messing Rohr, quadratischer
Querschnitt, 2MHz
Glykol 29–30°C

±18.69°
Reflektoren

FIG 8

Material : Messing   Reflektor für 2 MHz Meßrohr

| | $\alpha[°]$ | $\varphi[°]$ | bb[mm] | x[mm] | $\psi[°]$ |
|---|---|---|---|---|---|
| I) | 36.11 | 17.77 | 3.11 | 4.27 | 18.69 |

19

F I G 10

E    F    C    D

Schnittlinie    ψ    ψ

Schnittlinie    Schnittlinie

Richtungsvektoren der Schräg-
flächen(Reflektorflächen)

A
34mm -0.1
27.9mm -0.1
1.5mm
4mm
2.5mm
32mm

B
27.9mm
r
-0.1
α
bb
φ
φ
6.5mm
aa
bb
x

| | α | φ | bb | x | ψ |
|---|---|---|---|---|---|
| I | 36.11 | 17.77 | 3.11 | 4.27 | 18.69 |

Material : Messing
Schneiden von B wie in C u. D:
Aus je einem Paar B werden einmal
die schraffierten Teile passend geschnitten und einmal die weißen Teile.
Aus je einer Hälfte aus C und D werden
ein Teil E bzw. F zusammengesetzt.(zwei
schraffierte ergeben ein Teil E und zwei
weiße ergeben ein Teil F)

Reflektor für 2 MHz Meßrohr

EP 0 725 922 B1

FIG 11

FIG 12